Europäisches Patentamt

European Patent Office

Office européen des brevets

(11) Veröffentlichungsnummer: **0 455 024 A2**

## EUROPÄISCHE PATENTANMELDUNG

(21) Anmeldenummer: 91105905.3

(22) Anmeldetag: 13.04.91

(51) Int. Cl.5: **H01S 3/06, H01S 3/094**

(30) Priorität: 02.05.90 DE 4014034

(43) Veröffentlichungstag der Anmeldung:
**06.11.91 Patentblatt 91/45**

(84) Benannte Vertragsstaaten:
**AT BE CH DE DK ES FR GB IT LI NL SE**

(71) Anmelder: **Standard Elektrik Lorenz Aktiengesellschaft Lorenzstrasse 10**

W-7000 Stuttgart 40(DE)

(72) Erfinder: **Pfeiffer, Thomas, Dr. Lenzkircher Strasse 5A W-7000 Stuttgart 80(DE)**

(74) Vertreter: **Pohl, Heribert, Dipl.-Ing et al Standard Elektrik Lorenz AG Patent- und Lizenzwesen Postfach 30 09 29 W-7000 Stuttgart 30(DE)**

(54) **Optischer Verstärker.**

(57) Herkömmliche optische Verstärker zur Verstärkung eines sich in einem Lichtwellenleiter ausbreitenden optischen Signals weisen eine einzige Lichtquelle (5) zur Erzeugung eines Pumplichts auf, durch das eine laseraktive Substanz (2) auf ein erstes Energie-Niveau oberhalb ihres oberen Laser-Niveaus angeregt wird.

Erfindungsgemäß ist eine weitere Lichtquelle (7) vorhanden, durch deren Pumplicht die laseraktive Substanz (2) auf ein zweites Energie-Niveau angeregt wird, das oberhalb des ersten Energie-Niveaus liegt. Dann wird die spontane Emission zwischen den Laser-Niveaux der laseraktiven Substanz (2) zugunsten der induzierten Emission unterdrückt.

FIG.1

EP 0 455 024 A2

Die Erfindung betrifft einen optischen Verstärker nach dem Oberbegriff des Patentanspruchs 1 und ein Verfahren zur Verstärkung eines optischen Signals mittels eines Verstärkers nach dem Oberbegriff des Patentanspruchs 8.

Es ist bekannt, induzierte Emission aus einer laseraktiven Substanz durch optisches Pumpen zu bewirken. Dabei wird die Lichtquelle, die das Pumplicht erzeugt, so gewählt, daß ihr Emissionsspektrum Übereinstimmungen mit dem Absorptionsspektrum der laseraktiven Substanz aufweist. Bei geeigneter Wahl der Lichtquelle werden die Elektronen der laseraktiven Substanz auf einen Energiezustand oberhalb des oberen Laser-Niveaus angeregt. Von diesem Niveau aus relaxiert nach erfolgter Besetzungsiversion die Substanz, z.B. durch Phononenemission auf das obere Laser-Niveau, von dem aus durch induzierte Emission Photonen abgegeben werden, wenn durch die Photonen des optischen Signals ein äußeres Strahlungsfeld vorhanden ist. Die laseraktive Substanz geht in das untere Laser-Niveau über, der im Falle des 3-Niveau-Lasers der Grundzustand ist. Im Falle des 4-Niveau-Lasers geht die laseraktive Substanz wiederum durch Phononenemission aus dem unteren Laser-Niveau in den Grundzustand über.

Ein nach dem Prinzip des 3-Niveau-Lasers arbeitender optischer Verstärker ist aus Electronics Letters 23 (1987), S. 1026-1028, bekannt.

Ein optisches Signal breitet sich in einem Lichtwellenleiter aus, der mit einer Verbindung einer Seltenen Erde, hier mit einer Erbium-Verbindung, dotiert ist. Der Faserverstärker weist als Pumplichtquelle einen Farbstoff-Laser auf, dessen Licht über einen Faserkoppler in den Lichtwellenleiter gelangt, wo es die laseraktive Substanz zu induzierter Emission veranlaßt, wenn Licht des zu verstärkenden optischen Signals den Lichtwellenleiter durchläuft.

Neben der induzierten Emission werden bei der Rückkehr der laseraktiven Substanz in den tieferen Zustand auch spontan Photonen emittiert, die ein Rauschen im Signal verursachen.

Es ist die Aufgabe der Erfindung, einen optischen Verstärker der eingangs genannten Art zu schaffen, der den Rauschanteil vermindert.

Die Aufgabe wird bei einem derartigen optischen Verstärker, wie im Patentanspruch 1 angegeben, gelöst.

Weitere Ausbildungen der Erfindung ergeben sich aus den Unteransprüchen.

Es ist ebenfalls Aufgabe der Erfindung, ein Verfahren zur Verstärkung eines Lichtsignals mittels eines optischen Verstärkers zu schaffen. Diese Aufgabe wird, wie in Patentanspruch 8 angegeben, gelöst. Ein derartiges Lichtsignal weist deutlich weniger Rauschen auf als ein in einem herkömmlichen optischen Verstärker verstärktes Signal.

Anhand eines Ausführungsbeispieles wird die Erfindung anhand der Zeichnung erläutert. Es zeigen:

Fig. 1    einen Faserverstärker und

Fig. 2    ein vereinfachtes Niveau-Schema des dreiwertigen Erbium-Ions.

Ein optischer Verstärker ist beispielsweise auf einem Substrat integriert, ebenso wie ein erster Lichtwellenleiter, der beispielsweise Teil eines optischen Nachrichtenübertragungssystems ist. Das sich in dem Lichtwellenleiter ausbreitende optische Signal wird durch Einkoppeln eines ersten Pumplicht verstärkt. Die hierzu notwendige Lichtquelle ist beispielsweise ebenfalls auf dem Substrat integriert. Dies kann aber auch für eine zweite Lichtquelle zur Einkopplung eines zweiten Pumplichts gelten. Aus den Lichtquellen wird das Pumplicht über weitere auf dem Substrat integrierte Lichtwellenleiter in den ersten Lichtwellenleiter eingespeist. Dieser ist im Bereich des optischen Verstärkers mit einer laseraktiven Substanz dotiert, die Laserlicht emittiert, wenn Photonen (beispielsweise in Form von Datenbits) auf die Substanz treffen. Als laseraktive Substanz eignen sich u.a. die dreiwertigen Ionen Seltener Erden, z.B. Erbium- oder Neodym-Ionen, vorausgesetzt, das von ihnen emittierte Licht stimmt mit der Wellenlänge des Lichts überein, durch das die Datenbits übertragen werden.

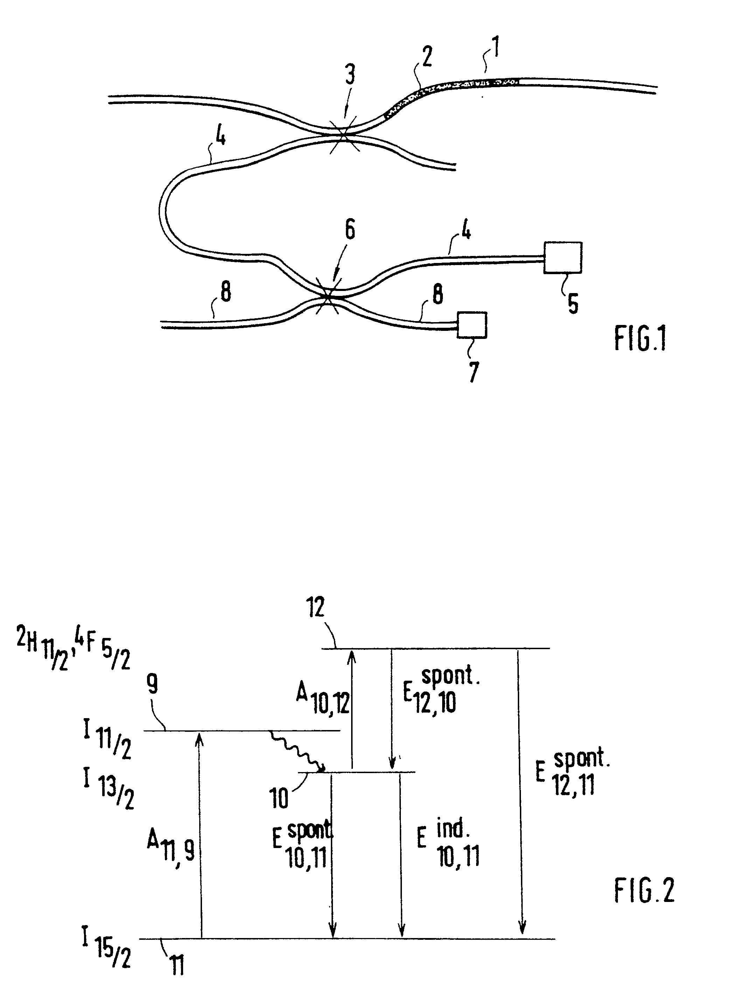

Ein Faserverstärker (Fig. 1) stellt einen nicht auf einem Substrat integrierten optischen Verstärker dar. Hier sind die Lichtwellenleiter als Lichtleitfasern ausgebildet, dem ersten Lichtwellenleiter entspricht die Lichtleitfaser 1, die in einem Bereich mit einer laseraktiven Substanz 2 dotiert ist. Durch einen Faserkoppler 3 ist die Lichtleitfaser 1 mit einer Lichtleitfaser 4 verbunden, durch die aus einer Lichtquelle 5 ein Pumplicht L1 in die Lichtleitfaser 4 eingespeist wird. Die Lichtquelle 5 ist beispielsweise ein Laser, z.B. ein Farbstofflaser.

In einem Faserkoppler 6 wird ein Pumplicht L2 aus einer Lichtquelle 7, die ebenfalls ein Laser sein kann, über eine Lichtleitfaser 8 in die Lichtleitfaser 4 eingespeist. Über die Lichtleitfaser 4 gelangt es dann in die Lichtleitfaser 1.

Statt über die Lichtleitfaser 4 kann das Pumplicht L2 auch unmittelbar über einen Faserkoppler in die Lichtleitfaser 1 eingespeist werden.

Die Lichtleitfasern 4, 8 lassen sich auch über einen Mehrfach-Faserkoppler, einen Sternkoppler gemeinsam mit der Lichtleitfaser 1 verbinden. Eine andere Möglichkeit zur Einkopplung des Pumplichts L1, L2 besteht darin, ein optisches Abbildungssystem zu wählen, das sich z.B. aus Linsen und Spiegeln zusammensetzt. Außerdem können weitere Lichtquellen zur Erzeugung von Pumplicht vorhanden sein, deren Emissionsfrequenzen dazu dienen, die laseraktive Substanz 2 auf Energie-Niveaux anzuregen, die oberhalb eines ersten Energie-Niveaus 9 (Fig. 2) liegen, welches sich oberhalb des oberen Laser-Niveaus 10 der laseraktiven Substanz 2 befindet, zu dem hin ein strahlungsloser Übergang durch Phononen stattfindet. Im Falle von Erbium-Ionen entspricht das Energie-Niveau 9 dem Term $I_{11/2}$, das Laser-Niveau 10 dem Term $I_{13/2}$.

Von dem Laser-Niveau 10 geht die laseraktive Substanz 2 entweder durch spontane Emission

$$E^{spont}_{10,11}$$

oder durch induzierte Emission

$$E^{ind}_{10,11}$$

in das untere Laser-Niveau 11 über, das hier dem Grundzustand $I_{15/2}$ der Erbium-Ionen entspricht.

Von dem unteren Laser-Niveau 11 geht die laseraktive Substanz 2 bei Einstrahlung des Pumplichts L1 durch Absorption $A_{11,9}$ in das Energie-Niveau 9 über.

Durch Einstrahlung des Pumplichts L2 geht die laseraktive Substanz 2 von dem oberen Laser-Niveau 10 durch Absorption $A_{10,12}$ in ein zweites Energie-Niveau 12 über, welches hier dem Term $^2 H_{11/2}$ oder $^4 F_{5/2}$ entspricht.

Durch spontane Emission

$$E^{spont}_{12,10}$$

kehrt die laseraktive Substanz 2 aus dem Energie-Niveau 12 in das obere Laser-Niveau 10 zurück. Der Übergang zwischen dem Energie-Niveau 12 und dem unteren Laser-Niveau 11 geschieht ebenfalls durch spontane Emission

$$E^{spont}_{12,11}.$$

Um die spontane Emission

$$E^{spont}_{10,11}$$

gegenüber der induzierten Emission

$$E^{ind}_{10,11}$$

stark zu unterdrücken, müssen folgende Bedingungen erfüllt sein:
Die Absorption $A_{10,12}$ muß gegenüber der spontanen Emission

$$E^{spont}_{10,11}$$

stark überwiegen.

Die Absorption $A_{10,12}$ ihrerseits muß sehr viel schwächer sein als die induzierte Emission

$$E^{ind}_{10,11}.$$

Außerdem muß die spontane Emission

$$E^{spont}_{12,11}$$

sehr viel stärker sein als die spontane Emission

$$E^{spont}_{12,10}.$$

Unter diesen Voraussetzungen, die analog gelten, wenn bei Einstrahlung von Pumplicht noch kürzerer Wellenlängen außer dem oberen Energie-Niveau 12 noch höhere Energie-Niveaux der laseraktiven Substanz 2 angeregt werden, wird die störende spontane Emission

$$E^{spont}_{10,11}$$

weitgehend unterdrückt.

**Patentansprüche**

1. Optischer Verstärker zur Verstärkung eines optischen Signals in einem Lichtwellenleiter, wobei der Lichtwellenleiter wenigstens in einem Bereich mit einer laseraktiven Substanz (2) dotiert ist, wobei eine erste Lichtquelle (5) zur Einkopplung eines ersten Pumplichts in den Lichtwellenleiter vorhanden ist und wobei die laseraktive Substanz (2) durch das erste Pumplicht auf ein erstes Energie-Niveau (9) oberhalb des oberen Laser-Niveaus (10) anregbar ist,
   **dadurch gekennzeichnet,**
   daß eine zweite Lichtquelle (7) zur Einkopplung eines zweiten Pumplichts in den Lichtwellenleiter vorhanden ist, wobei die laseraktive Substanz (2) in dem Lichtwellenleiter durch das zweite Pumplicht auf ein zweites Energie-Niveau (12) oberhalb des ersten Energie-Niveaus (9) anregbar ist.

2. Optischer Verstärker nach Anspruch 1, dadurch gekennzeichnet, daß er ein Faserverstärker ist, daß der Lichtwellenleiter eine erste Lichtleitfaser (1) ist, daß wenigstens ein erster Faserkoppler (3) zur Einkopplung des ersten und des zweiten Pumplichts aus wenigstens einer zweiten Lichtleitfaser (4) in die erste Lichtleitfaser (1) vorhanden ist.

3. Optischer Verstärker nach Anspruch 2, dadurch gekennzeichnet, daß die zweite Lichtleitfaser (4) zur Übertragung des ersten Pumplichts dient, daß zur Übertragung des zweiten Pumplichts eine dritte Lichtleitfaser (8) vorhanden ist, die über einen zweiten Faserkoppler (6) mit der zweiten Lichtleitfaser (4) verbunden ist.

4. Optischer Verstärker nach Anspruch 2, dadurch gekennzeichnet, daß zur Übertragung des zweiten Pumplichts eine dritte Lichtleitfaser (8) vorhanden ist, die über einen weiteren Faserkoppler mit der ersten Lichtleitfaser (1) verbunden ist.

5. Optischer Verstärker nach Anspruch 2, dadurch gekennzeichnet, daß zur Übertragung des zweiten Pumplichts eine dritte Lichtleitfaser (8) vorhanden ist und daß die erste (1), die dritte (4) und die dritte Lichtleitfaser (8) in einem Mehrfachkoppler miteinander verbunden sind.

6. Optischer Verstärker nach Anspruch 2, dadurch gekennzeichnet, daß weitere Lichtquellen zur Erzeugung von Pumplicht vorhanden sind, wobei die laseraktive Substanz (2) durch dieses Pumplicht auf Energie-Niveaux anregbar ist, die oberhalb des ersten Energie-Niveaus (9) liegen.

7. Optischer Verstärker nach Anspruch 2, dadurch gekennzeichnet, daß wenigstens eine der beiden Lichtquellen (5, 7) eine Laserlichtquelle ist.

8. Verfahren zur Verstärkung eines optischen Signals in einem ersten Lichtwellenleiter, der wenigstens in einem Bereich mit einer laseraktiven Substanz dotiert ist, wobei über einen Koppler Pumplicht in den ersten Lichtwellenleiter einfällt und die laseraktive Substanz durch Absorption auf ein erstes Energie-Niveau oberhalb des oberen Laser-Niveaus anregt, **dadurch gekennzeichnet,**

daß ein zweites Pumplicht in den ersten Lichtwellenleiter eintritt und die laseraktive Substanz auf ein zweites Energie-Niveau oberhalb des ersten Energie-Niveaus anregt.

FIG.1

$^2H_{11/2}, ^4F_{5/2}$

$I_{11/2}$    9

$I_{13/2}$

$A_{11,9}$

$I_{15/2}$    11

12

$A_{10,12}$

$E^{spont.}_{12,10}$

10

$E^{spont.}_{10,11}$

$E^{ind.}_{10,11}$

$E^{spont.}_{12,11}$

FIG.2